# EUROPÄISCHE PATENTSCHRIFT

(11) **EP 3 488 979 B1**
(45) Veröffentlichungstag und Bekanntmachung des Hinweises auf die Patenterteilung: **29.04.2020**
(21) Anmeldenummer: 18206531.8
(22) Anmeldetag: 15.11.2018
(51) Int. Cl.: B25H 3/06, C08L 83/04

(54) **ABFORMMATERIAL FÜR ORDNUNGSSYSTEME**
IMPRESSION MATERIAL FOR ORDER SYSTEMS
MATIÈRE À EMPREINTE POUR SYSTÈMES DE CLASSEMENT

(30) Priorität: 23.11.2017 AT 509782017
(43) Veröffentlichungstag der Anmeldung: 29.05.2019
(73) Patentinhaber: WZV - Werkzeugvertriebs GmbH, 1230 Wien (AT)
(72) Erfinder: Haider, Heinz, 1210 Wien (AT)
(74) Vertreter: KLIMENT & HENHAPEL

(56) Entgegenhaltungen:
- EP-A2- 2 399 713
- JP-A- H06 313 659

## Beschreibung

Die Erfindung bezieht sich auf die Verwendung eines 2-Komponenten-Systems mit einer ein chemisch vernetzendes Silikonpolymer in Form eines kondensationsvernetzenden Silikonkautschuk sowie Füllstoffe und gegebenenfalls weitere Hilfs- oder Zusatzstoffe umfassenden, ersten Komponente, sowie einer zumindest einen Härter für das chemisch vernetzende Silikonpolymer umfassenden, zweiten Komponente, als Abformmaterial zur Herstellung eines Einsatzes für Ordnungssysteme für Formteile wie Werkzeuge oder Maschinenteile über Abformung der Formteile als Aufnahmen für die Formteile bildende Vertiefungen im erhärteten Abformmaterial. Die Erfindung bezieht sich des Weiteren auf ein entsprechendes Ordnungssystem gemäß Anspruch 9.

Ordnungssysteme für Werkzeuge, Maschinenteilen und dgl. sind etwa aus der AT 510.069 B1 der Anmelderin bekannt und weisen Einsätze mit als Vertiefungen ausgebildete Aufnahmen für die Werkzeuge, Maschinenteile und dgl. auf, wobei die Kontur der Aufnahmen auf die Außenkontur der aufzunehmenden Werkzeuge, Maschinenteile und dgl., die in weiterer Folge auch als Formteile bezeichnet werden, abgestimmt ist. Solche Ordnungssysteme sind z.B. Werkzeugschränke, Werkzeugtaschen oder ähnliche der Aufbewahrung von Werkzeugen und dgl. dienende Gegenstände wie etwa Werkzeugkoffer. Hierzu werden Einsätze in Schubladen oder Fächer von Kästen oder Koffer und Taschen eingesetzt. Hierdurch wird in einfacher Art und Weise erreicht, dass in einen bestimmten Einsatz ein vorbestimmter Satz von Werkzeugen oder dgl. geordnet aufbewahrt werden kann. Ordnungssysteme gewinnen insbesondere in so genannten 5S-Arbeitsumgebungen zunehmend Verwendung, um Arbeitsplätze und ihr Umfeld sicher, sauber und übersichtlich zu gestalten. Hierbei besteht die Auffassung, dass Ordnung und Sauberkeit Grundvoraussetzungen zur Verbesserung der Arbeitsprozesse und Arbeitssicherheit sind, welche an ihnen ablaufen. Das Ziel von Ordnungssystemen in einem 5S-Arbeitsumfeld ist insbesondere die Arbeitsplätze so zu gestalten, dass die Arbeit störungsfrei ablaufen kann, Suchen ebenso wie lange Transportwege und Wartezeiten vermieden werden und dadurch zeiteffektiv, qualitätsvoll und sicher gearbeitet werden kann.

In bekannter Weise wird zur Herstellung eines Einsatzes für Ordnungssysteme Abformmaterial auf der Basis von Polyurethan verwendet. Hierzu wird das Abformmaterial zuerst in viskosem Zustand in einer Form aufgebracht und gegebenenfalls nach Abwarten einer ersten Aushärtung die Formteile in das Abformmaterial eingelegt. Nach vollständiger Aushärtung des Abformmaterials können die eingelegten Formteile entnommen werden, wobei Vertiefungen im ausgehärteten Abformmaterial verbleiben, deren Kontur auf die Außenkontur der eingelegten Formteile abgestimmt ist und fortan als Aufnahmen für diese Formteile dienen.

Auf diese Weise hergestellte Einsätze für Ordnungssysteme weisen aber eine Reihe von Nachteilen auf. So zeigt sich etwa, dass der Zeitpunkt der Belegung des aushärtenden Abformmaterials mit den Formteilen entscheidend ist und nicht zu früh, aber auch nicht zu spät und nur innerhalb eines vergleichsweise engen Zeitfensters erfolgen darf. Zudem ist die Entnahme der Formteile kaum möglich, ohne dass Rückstände des Abformmaterials auf den entnommenen Formteilen verbleiben. Diese Formteile müssen daher gereinigt werden, zudem leidet die Wiedergabegenauigkeit der Aufnahmen für die jeweiligen Formteile. Die Herstellung solcher Ordnungssysteme stellt daher einen Aufwand dar, der dem Anwender mitunter nicht zumutbar ist. Daher werden herkömmliche Ordnungssysteme zumeist vom Anbieter solcher Ordnungssysteme selbst je nach Anforderung hergestellt, was den Aufwand seitens des Anbieters und somit die Kosten erhöht. Stattdessen wäre es wünschenswert, wenn der Anwender selbst je nach Anforderung ein geeignetes Ordnungssystem mittels eines einfach zu verarbeitenden Abformmaterials herstellen könnte. Dabei wäre es vorteilhaft, wenn das Abformmaterial rasch und komfortabel zu verarbeiten ist, und zudem eine stabile Abbindekinetik aufweist, also eine von Luftfeuchtigkeit und Umgebungstemperatur weitestgehend unabhängige Aushärtung aufweist.

Es besteht somit das Ziel der Erfindung darin ein Abformmaterial zur Herstellung eines Einsatzes für Ordnungssysteme bereitzustellen, das einfach und komfortabel zu verarbeiten ist und insbesondere Rückstände des Abformmaterials auf die abzuformenden Formteile vermeidet.

Diese Ziele werden durch die Merkmale von Anspruch 1 erreicht. Anspruch 1 schlägt die Verwendung eines 2-Komponenten-Systems mit einer ein chemisch vernetzendes Silikonpolymer in Form eines kondensationsvernetzenden Silikonkautschuk sowie Füllstoffe und gegebenenfalls weitere Hilfs- oder Zusatzstoffe umfassenden, ersten Komponente, sowie einer zumindest einen Härter für das chemisch vernetzende Silikonpolymer umfassenden, zweiten Komponente, als Abformmaterial zur Herstellung eines Einsatzes für Ordnungssysteme für Formteile wie Werkzeuge oder Maschinenteile über Abformung der Formteile als Aufnahmen für die Formteile bildende Vertiefungen im erhärteten Abformmaterial vor. Das erfindungsgemäße 2-Komponenten-System stellt ein einfach und komfortabel zu verarbeitendes Abformmaterial bereit, wie noch näher beschrieben werden wird. Die beiden Komponenten werden vor der Anwendung miteinander homogen gemischt und vernetzen ab Mischbeginn unter zunehmender Aushärtung gemäß einer vorgegebenen und stabilen Abbindekinetik zu einem Silikonelastomer.

Dass sich 2-Komponentensysteme auf Basis vernetzender Silikonpolymere zur Bereitstellung einfach zu verarbeitender Abformmassen für das Abformen von Werkzeugen eignen, war durchaus überraschend. Im Bereich der Dentaltechnik werden zwar 2-Komponenten-Silikonkautschuke (RTV-2) mit platinkatalysierten Additionsvernetzern als Abformmassen eingesetzt, da diese auch bei Raumtemperatur härten und keine Spaltprodukte bilden, sodass die Aushärtung des Silikonkautschuks ohne Schrumpf und ohne Freisetzung von geruchs- oder geschmacksbeeinträchtigenden Stoffen erfolgt, was für medizinische Anwendungen sehr wichtig ist. Diese 2-Komponentensysteme sind aber empfindlich für Inhibierungen durch andere Substanzen, insbesondere durch Metallionen. Sie sind somit nicht für ein Abformen von metallischen Gegenständen wie Werkzeuge oder Maschinenteile geeignet, da der Abformvorgang genau dort beeinträchtigt wird, wo er am entscheidendsten ist, nämlich im Kontaktbereich zu den Werkzeugen oder Maschinenteilen. Bei herkömmlichen kondensationsvernetzenden Zweikomponenten-Silikonkautschuksysteme (2K-RTV-Systeme) wiederum reagieren die endständigen Hydroxygruppen des Polymers mit einem Siloxanvernetzer unter Abspaltung kleiner, flüchtiger Verbindungen wie Alkohol, Essigsäure oder Amin. Durch diese Abspaltung kommt es im Gegensatz zu den additionsvernetzenden Silikonkautschuken zu einem Materialschwund von ca. 3 Vol.%, sodass von der Verwendung kondensationsvernetzender Zweikomponentensysteme als Abformmasse in der Regel abgeraten wird. Die kondensationsvernetzende Vulkanisation wird des Weiteren in der Regel durch zinn- oder titanorganische Verbindungen in der Gegenwart von geringen Mengen Wasser katalysiert, die als Gefahrenstoffe zu deklarieren sind und für den Anwender daher problematisch sind.

Erfindungsgemäß wird die Verwendung eines 2-Komponentensystems auf Basis eines kondensationsvernetzenden Silikonkautschuks vorgeschlagen. Ein solcher Silikonkautschuk vernetzt bei Raumtemperatur, wobei sich die Abbindekinetik durch Variation der Härtermengen bzw. der Wahl eines langsamen oder schnellen Härters in bestimmten Grenzen herstellerseitig gut einstellen lässt, wie in weiterer Folge noch näher erläutert wird, und weist dabei eine stabile Abbindekinetik auf. Zudem ist ein solcher Silikonkautschuk weitgehend unempfindlich gegenüber Inhibierungen durch andere Substanzen, insbesondere durch Metallionen.

Die Anmelderin hat ferner festgestellt, dass der bei kondensationsvernetzenden Silikonkautschuken auftretende Materialschwund bei der Abformung von Werkzeugen oder Maschinenteilen keinen Nachteil darstellt und durch Verwendung eines Formtrennmittels vernachlässigbar ist. Es wird daher vorzugsweise vorgeschlagen, dass die erste Komponente zusätzlich ein Formtrennmittel umfasst, bei dem es sich um ein Silikonöl und/oder ein Paraffinöl handelt. Das Formtrennmittel dient der Reduzierung der Adhäsionskräfte zwischen den Formteilen und dem Abformmaterial und vermeidet Rückstände an den Formteilen, wodurch nicht nur die Herstellung von Einsätzen für Ordnungssysteme erleichtert wird, sondern auch Beschädigungen der Aufnahmen für die jeweiligen Formteile, die bis zur Unbenutzbarkeit des Einsatzes führen können, vermieden werden. Das als Formtrennmittel vorgeschlagene Silikonöl und/oder Paraffinöl "schwitzt" im Zuge der Verarbeitung aus dem Abformmaterial aus und ermöglicht auf diese Weise eine rückstandsfreie Entnahme der Formteile sowie ein gutes Abdruckverhalten bei hoher Wiedergabegenauigkeit.

Diese Eigenschaften werden vorzugsweise genutzt, um dem Abformmaterial eine nicht-lineare Abbindekinetik mit einer ab Mischbeginn der ersten und der zweiten Komponente rascheren Aushärtung, gefolgt von einer langsameren Aushärtung zu verleihen. Eine solche nicht-lineare Abbindekinetik erleichtert die Verarbeitung durch den Anwender entscheidend, da sie ihm ein vergleichsweise großes Zeitfenster zur Belegung des Abformmaterials mit den Formteilen verschafft. Die vergleichsweise raschere Aushärtung nach Mischbeginn gestattet eine vergleichsweise frühe Belegung des aushärtenden Abformmaterials mit den Formteilen. Die darauf folgende, vergleichsweise langsamere Aushärtung verschafft ausreichend Zeit zur Belegung des aushärtenden Abformmaterials mit den Formteilen. Auf diese Weise wird die Verarbeitung des Abformmaterials im Gegensatz zu herkömmlichen Abformmaterialien mit linearer Abbindekinetik sehr erleichtert.

Eine Möglichkeit zur Sicherstellung der nicht-linearen Abbindekinetik besteht etwa darin, dass die zweite Komponente zwei Härter mit unterschiedlichen Topfzeiten umfasst. Die Topfzeit eines Härters stellt eine Angabe über die Geschwindigkeit der durch ihn bewirkten Abbindereaktion dar. Mithilfe der Verwendung zweier Härter mit unterschiedlichen Topfzeiten wird somit eine nicht-lineare Abbindekinetik bewirkt. Eine mögliche Ausführungsvariante sieht etwa vor, dass der erste Härter eine Topfzeit von 15-25 min aufweist, und der zweite Härter eine Topfzeit von 80-100 min. Eine mögliche Wahl für kondensationsvernetzende Silikonkautschuke stellen etwa Härter auf Basis von Organo-Zinnverbindungen, Kieselsäureester und Polydimethylsiloxanen dar, die unterschiedliche Härtezeiten aufweisen. Im Rahmen der vorliegenden Erfindung werden hingegen bismutorganische Härter vorgeschlagen, die weder empfindlich gegenüber Inhibierungen durch andere Substanzen, insbesondere Metallionen, sind, noch als Gefahrenstoffe zu deklarieren sind. Eine mögliche Ausführungsvariante sieht etwa einen ersten Härter mit einer Topfzeit von 20 min und einen zweiten Härter mit einer Topfzeit von 90 min in einem Verhältnis von 60:40 vor. Durch deren Zugabe im flüssigen oder pastenförmigen Zustand zur ersten Komponente ist eine reibungslose Vulkanisation bei Temperaturen zwischen 0°C und 70°C sichergestellt.

Bei den Füllstoffen handelt es sich vorzugsweise um einen polymeren Leichtfüllstoff, etwa in Form von Mikrohohlkugeln mit einer Dichte von 30 kg/m³. Diese Füllstoffe ermöglichen die Herstellung kostengünstiger und leichter Einsätze für Ordnungssysteme und werden in einem Anteil von über 50 Volumsprozent der ersten Komponente beigemengt.

Schließlich wird ein Ordnungssystem für Formteile wie Werkzeuge, Maschinenteile und dgl. mit als Abformung der Formteile erzeugte und Aufnahmen für die Formteile bildende Vertiefungen in einem erhärteten Abformmaterial gemäß der Erfindung vorgeschlagen.

Die Erfindung wird in weiterer Folge anhand von Ausführungsbeispielen mithilfe der beiliegenden Zeichnungen näher erläutert. Es zeigen hierbei die
Fig. 1a eine mögliche Ausführungsform eines in einer Lade gehaltenen Einsatzes für ein Ordnungssystem,
Fig. 1b den Einsatz gemäß Fig. 1a ohne Lade, und die
Fig. 2 eine Darstellung zur nicht-linearen Abbindekinetik.

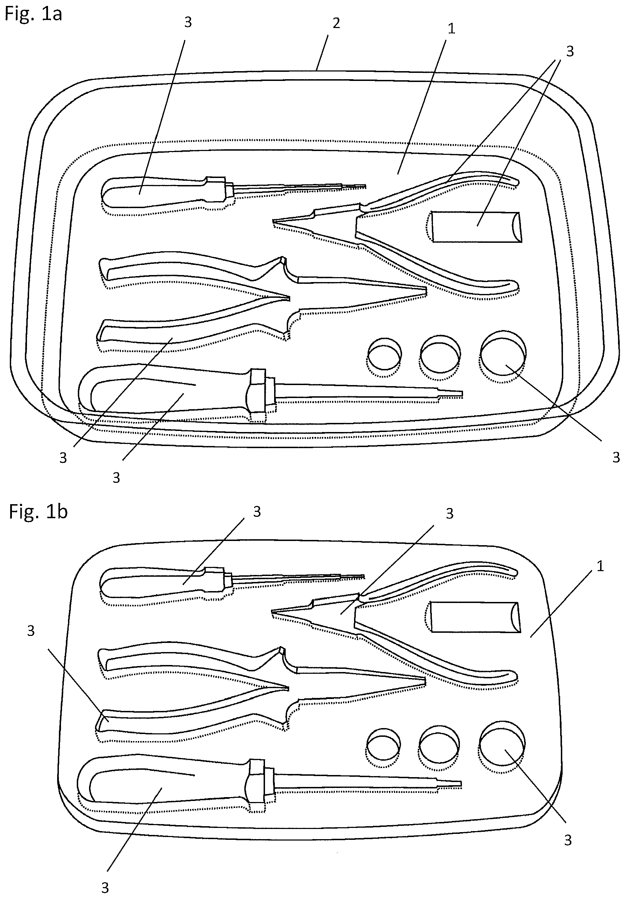

Zunächst wird auf die Fig. 1a und 1b Bezug genommen. Die Fig. 1a und 1b zeigen eine mögliche Ausführungsform eines Einsatzes 1 für ein Ordnungssystem für Werkzeuge und Werkzeugteile. Der Einsatz 1 ist gemäß Fig. 1a in einer Lade 2 gehalten und weist als Vertiefungen ausgebildete Aufnahmen 3 für die Werkzeuge und Werkzeugteile auf, wobei die Kontur der Aufnahmen 3 auf die Außenkontur der aufzunehmenden Werkzeuge und Werkzeugteile, die hier auch als Formteile bezeichnet werden, abgestimmt ist. Solche Einsätze 1 für Ordnungssysteme werden etwa in Werkzeugschränken, Werkzeugtaschen, Werkzeugkoffer und dergleichen eingesetzt. Hierdurch wird in einfacher Art und Weise erreicht, dass in einen bestimmten Einsatz 1 ein vorbestimmter Satz von Werkzeugen oder Werkzeugteilen geordnet aufbewahrt werden kann.

Zur Herstellung eines Einsatzes 1 gemäß der Fig. 1 wird ein Abformmaterial auf Basis eines 2-Komponenten-Systems verwendet, wobei die erste Komponente einen kondensationsvernetzenden Silikonkautschuk umfasst, sowie ein Formtrennmittel, etwa ein Silikonöl und/oder ein Paraffinöl. Zudem enthält die erste Komponente einen Leichtfüllstoff mit einem Anteil von über 50 Volumsprozent der ersten Komponente, vorzugsweise einen polymeren Leichtfüllstoff wie etwa Mikrohohlkugeln mit einer Dichte von etwa 30 kg/m³. Die zweite Komponente enthält zwei Härter mit unterschiedlichen Topfzeiten. Eine mögliche Wahl für kondensationsvernetzende Silikonkautschuke stellen etwa bismutorganische Härter dar, die unterschiedliche Härtezeiten aufweisen. Eine mögliche Ausführungsvariante sieht etwa einen ersten Härter mit einer Topfzeit von 20 min und einen zweiten Härter mit einer Topfzeit von 90 min in einem Verhältnis von 60:40 vor. Zudem können Farbpasten enthalten sein, um dem Einsatz 1 ein attraktives Aussehen zu verleihen. Eine mögliche Zusammensetzung des erfindungsgemäßen Abformmaterials wird in Tabelle 1 spezifiziert.

**Tabelle 1**

| | Volumsanteile | Volumsprozent | Gewichtsprozent |
|---|---|---|---|
| Silikon¹⁾ | 100 | 36 | 76 |
| Härter²⁾ | 5 | 2 | 3 |
| Silikonöl³⁾ | 20 | 7 | 15 |
| Farbpaste | 3 | 1 | 3 |
| Leichtfüllstoffe⁴⁾ | 150 | 54 | 3 |

| | | | |
|---|---|---|---|
| 1) Kondensationsvernetzender 2-Komponenten-Slkonkautschuk 2) Härter 1 (60%): Topfzeit 20min; Härter 2 (40%): Topfzeit 90min 3) dient als Weichmacher und Entformungshilfe 4) Polymere Leichtfüllstoffe (Mikrohohlkugeln) mit einer Dichte von ca. 30 kg/m³ | | | |

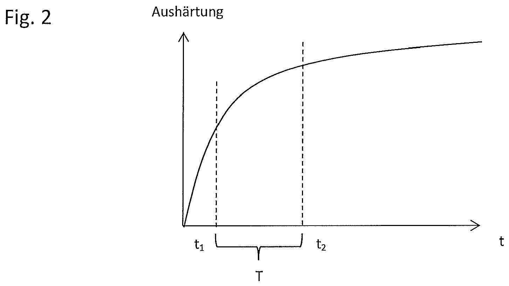

Die beiden Komponenten werden vor der Anwendung miteinander homogen gemischt und im gießfähigen Zustand in eine dem Einsatz 1 entsprechenden Form gegossen. Die beiden Komponenten vernetzen ab Mischbeginn unter zunehmender Aushärtung gemäß einer vorgebbaren und stabilen Abbindekinetik zu einem Silikonelastomer. Mithilfe der Verwendung zweier Härter mit unterschiedlichen Topfzeiten wird hierbei eine nicht-lineare Abbindekinetik bewirkt, wie anhand der Fig. 2 erläutert wird, die auf der Abszisse die Zeit zeigt und auf der Ordinate die Aushärtung. Die nicht-lineare Abbindekinetik zeichnet sich durch eine ab Mischbeginn der ersten und der zweiten Komponente raschere Aushärtung aus, gefolgt von einer langsameren Aushärtung. Die vergleichsweise raschere Aushärtung nach Mischbeginn gestattet eine vergleichsweise frühe Belegung des aushärtenden Abformmaterials mit den Formteilen ab einem Zeitpunkt t₁ von etwa 30-40 min(siehe Fig. 2), ohne dass die Formteile absinken. Die darauf folgende, vergleichsweise langsamere Aushärtung verschafft ausreichend Zeit zur Belegung des aushärtenden Abformmaterials mit den Formteilen bis zu einem Zeitpunkt t₂ von etwa 90-100 min. Eine solche nicht-lineare Abbindekinetik erleichtert die Verarbeitung durch den Anwender entscheidend, da sie ihm ein vergleichsweise großes Zeitfenster T von etwa 60 min zur Belegung des Abformmaterials mit den Formteilen verschafft. Auf diese Weise wird die Verarbeitung des Abformmaterials sehr erleichtert. Die Abbindekinetik lässt sich dabei herstellerseitig durch Variation der Härtermengen bzw. der Wahl eines langsamen oder schnellen Härters in bestimmten Grenzen gut einstellen.

Das Formtrennmittel dient der Reduzierung der Adhäsionskräfte zwischen den Formteilen und dem Abformmaterial und vermeidet Rückstände an den Formteilen, wodurch nicht nur die Herstellung von Einsätzen 1 für Ordnungssysteme erleichtert wird, sondern auch Beschädigungen der Aufnahmen 3 für die jeweiligen Formteile, die bis zur Unbenutzbarkeit des Einsatzes 1 führen können, vermieden werden. Diese Formtrennmittel "schwitzen" im Zuge der Verarbeitung aus dem Abformmaterial aus und ermöglichen auf diese Weise eine rückstandsfreie Entnahme der Formteile sowie ein gutes Abdruckverhalten bei hoher Wiedergabegenauigkeit.

Das erfindungsgemäß vorgeschlagene 2-Komponenten-System stellt somit ein einfach und komfortabel zu verarbeitendes Abformmaterial bereit, wobei Rückstände des Abformmaterials auf die abzuformenden Formteile vermieden werden. Das erfindungsgemäß vorgeschlagene Abformmaterial ermöglicht es dem Anwender selbst je nach Anforderung ein geeignetes Ordnungssystem herzustellen, da es rasch und komfortabel zu verarbeiten ist, und zudem eine stabile Abbindekinetik aufweist, also eine von Luftfeuchtigkeit und Umgebungstemperatur weitestgehend unabhängige Aushärtung.

## Patentansprüche

1. Verwendung eines 2-Komponenten-Systems mit einer ein chemisch vernetzendes Silikonpolymer in Form eines kondensationsvernetzenden Silikonkautschuk sowie Füllstoffe und gegebenenfalls weitere Hilfs- oder Zusatzstoffe umfassenden, ersten Komponente, sowie einer zumindest einen Härter für das chemisch vernetzende Silikonpolymer umfassenden, zweiten Komponente, als Abformmaterial zur Herstellung eines Einsatzes für Ordnungssysteme für Formteile wie Werkzeuge oder Maschinenteile über Abformung der Formteile als Aufnahmen (3) für die Formteile bildende Vertiefungen im erhärteten Abformmaterial.

2. Verwendung als Abformmaterial nach Anspruch 1, **durch gekennzeichnet,** dass die erste Komponente zusätzlich ein Formtrennmittel umfasst, bei dem es sich um ein Silikonöl und/oder ein Paraffinöl handelt.

3. Verwendung als Abformmaterial nach Anspruch 1 oder 2, **durch gekennzeichnet,** dass es sich bei dem zumindest einen Härter um einen bismutorganischen Härter handelt.

4. Verwendung als Abformmaterial nach einem der Ansprüche 1 bis 3, **durch gekennzeichnet,** dass es eine nicht-lineare Abbindekinetik mit einer ab Mischbeginn der ersten und der zweiten Komponente rascheren Aushärtung, gefolgt von einer langsameren Aushärtung aufweist.

5. Verwendung als Abformmaterial nach einem der Ansprüche 1 bis 4, **durch gekennzeichnet,** dass die zweite Komponente zwei Härter mit unterschiedlichen Topfzeiten umfasst.

6. Verwendung als Abformmaterial nach Anspruch 5, **durch gekennzeichnet,** dass der erste Härter eine Topfzeit von 15-25 min aufweist, und der zweite Härter eine Topfzeit von 80-100 min aufweist.

7. Verwendung als Abformmaterial nach einem der Ansprüche 1 bis 6, **durch gekennzeichnet,** dass es sich bei den Füllstoffen um einen polymeren Leichtfüllstoff handelt, wobei es sich bei dem Leichtfüllstoff um Mikrohohlkugeln mit einer Dichte von 30 kg/m³ handelt.

8. Ordnungssystem für Formteile wie Werkzeuge oder Maschinenteile mit als Abformung der Formteile erzeugte und Aufnahmen für die Formteile bildende Vertiefungen in einem erhärteten Abformmaterial gemäß der Verwendung nach einem der Ansprüche 1 bis 8.

## Claims

1. Use of a 2-component system having a first component comprising a chemically crosslinking silicone polymer in the form of a condensation-crosslinldng silicone rubber as well as fillers and optionally further auxiliary substances or additives, as well as a second component comprising at least one hardener for the chemically crosslinking silicone polymer, as impression material for the production of an insert for arrangement systems for shaped parts such as tools or machine parts via impression of the shaped parts as recesses in the hardened impression material forming receptacles (3) for the shaped parts.

2. Use as impression material according to claim 1, **characterized in that** the first component additionally comprises a mold release agent which is a silicone oil and/or a paraffin oil.

3. Use as impression material according to claim 1 or 2, **characterized in that** the at least one hardener is an organo-bismuth hardener.

4. Use as impression material according to one of claims 1 to 3, **characterized in that** it has a non-linear setting kinetics with a faster curing from the start of mixing of the first and second components, followed by a slower curing.

5. Use as impression material according to one of claims 1 to 4, **characterized in that** the second component comprises two hardeners with different pot lives.

6. Use as impression material according to claim 5, **characterized in that** the first hardener has a pot life of 15-25 min, and the second hardener has a pot life of 80-100 min.

7. Use as impression material according to one of claims 1 to 6, **characterized in that** the fillers concern a polymeric light filler, wherein the light filler concerns hollow microspheres with a density of 30 kg/m³.

8. Arrangement system for shaped parts such as tools or machine parts with recesses in a hardened impression material produced as impressions of the shaped parts and forming receptacles for the shaped parts in accordance with the use according to one of claims 1 to 8.

## Revendications

1. Utilisation d'un système bicomposant avec un premier composant comprenant un polymère de silicone à polymérisation chimique sous la forme d'un caoutchouc au silicone polymérisant par condensation et des charges et éventuellement d'autres adjuvants ou additifs, ainsi qu'un deuxième composant contenant au moins un durcisseur pour le polymère de silicone à polymérisation chimique, comme matériau d'empreinte pour fabriquer un insert pour des systèmes de rangement de pièces moulées telles que des outils ou des pièces de machine par la prise d'empreintes des pièces moulées comme creux dans le matériau d'empreinte durci formant des logements (3) pour les pièces moulées.

2. Utilisation comme matériau d'empreinte selon la revendication 1, **caractérisée en ce que** le premier composant comprend en outre un agent de démoulage qui est une huile de silicone ou une huile de paraffine.

3. Utilisation comme matériau d'empreinte selon la revendication 1 ou 2, **caractérisée en ce que** l'au moins un durcisseur est un dérivé organique de bismuth.

4. Utilisation comme matériau d'empreinte selon l'une des revendications 1 à 3, **caractérisée en ce qu'**il présente une cinétique de prise non linéaire avec un durcissement plus rapide à partir du début du mélange du premier composant et du deuxième, suivi d'un durcissement plus lent.

5. Utilisation comme matériau d'empreinte selon l'une des revendications 1 à 4, **caractérisée en ce que** le deuxième composant contient deux durcisseurs ayant deux durées de conservation en pot différentes.

6. Utilisation comme matériau d'empreinte selon la revendication 5, **caractérisée en ce que** le premier durcisseur a une durée de conservation en pot de 15 à 25 minutes et le deuxième durcisseur une durée de conservation en pot de 80 à 100 minutes.

7. Utilisation comme matériau d'empreinte selon l'une des revendications 1 à 6, **caractérisée en ce que** les charges sont une charge légère en polymère, la charge légère étant formée de microbilles creuses ayant une masse volumique de 30 kg/m³.

8. Système de rangement de pièces moulées telles que des outils ou des pièces de machine avec des creux créés sous forme d'empreintes des pièces moulées et formant des logements pour les pièces moulées dans un matériau d'empreinte durci suivant l'utilisation selon l'une des revendications 1 à 8.
